# EUROPEAN PATENT APPLICATION

(11) **EP 2 073 424 A1**
(43) Date of publication of application: **24.06.2009**
(21) Application number: 07425818.7
(22) Date of filing: 21.12.2007
(51) Int. Cl.: H04L 1/18

(54) **System and method for error recovery for wireless multihop communication**

(71) Applicant: Nokia Siemens Networks S.p.A., 20126 Milano (IT); Nokia Siemens Networks Oy, 02610 Espoo (FI)
(72) Inventor: Simone, Redana, 25034 Orzinovi (BS) (IT); Beniero, Tommaso, 46046 Medole (MN) (IT)
(74) Representative: Fischer, Michael

(57) **Abstract**

In order to optimize error recovery procedures of data packet transmission from a source node (BS) to a destination node (UE) over a wireless communication system, a first data packet (PK1) is sent from the source node (BS) to the destination node (UE). Upon arrival of the first data packet (PK1), the destination node (UE) sends an acknowledgment message (MSG1) via a relay node (RN5) to the source node (BS). The acknowledgment message (MSG1) indicates the arrival of the first data packet (PK1) at the destination node (UE). Between the sending of the first data packet (PK1) from the source node (BS) and the receiving of the acknowledgment message (MSG1) at the source node, the first data packet (PK1) is resent. Upon arrival of the second data packet (PK2) at the relay node (RN5) the second data packet (PK2) is dropped due to an arrival of the acknowledgment message (MSG1) at the relay node (RN5).

## Description

The present invention relates to the technical field of error recovery procedures of data packet transmission from a source node to a destination node over a wireless communication system.

Broadband wireless market nowadays is the place where major industries are converging in the field of wireless mobile communications, information technology, and multimedia entertainment. This also accounts for the 3rd Generation Long Term Evolution (3G LTE), which is currently under study by 3rd Generation Partnership Group (3GPP), or in systems conforming to IEEE Standards 802.11 and 802.16. The 3G LTE is an attempt to step into wireless broadband taken by cellular providers and equipment vendors. Details on 3G LTE can be found in a number of documents of 3GPP: we mention for instance 3GPP Technical Report (TR) 10.164, "Physical layer aspects for evolved Universal Terrestrial Radio Access (UTRA)", 3GPP TR 10.913 "Requirements for Evolved UTRA", 3GPP TR 23.882 "3GPP System Architecture Evolution: Report on Technical Options and Conclusions" and 3GPP Technical Specification (TS) 36.300, "E-UTRA and E-UTRAN: Overall description".

The requirements for LTE can be summarized as follows:
- Peak data rates of 100 Mb/s in the downlink and 50 Mb/s in the uplink.
- Reduced user- and control-plane latency to less than 10 ms and less than 100 ms respectively.
- Mobility support up to 350 km/h, with high performance up to 120 km/h while optimal performance is targeted for speeds below 14 km/h.
- Spectrum flexibility and reduced network costs.

To achieve the above-mentioned targets new updates to the radio interface as well as modifications to the network architecture are considered. In particular, 3G LTE introduces evolved radio interface with major enhancement coming from the use of Orthogonal Frequency Division Multiplexing (OFDM) and multiple antenna techniques. These technologies are already available on the market and are used e.g. in systems conforming to IEEE 802.16 standard, such as those proposed by the Worldwide Interoperability for Microwave Access (WiMAX) forum.

Along with the evolved radio interface, 3G LTE specifies evolution of network architecture (System Architecture Evolution, SAE), which is designed to contain fewer network nodes and is focused on packet data communications using the TCP/IP protocol suite, rather than on the traditional circuit-switched approach. As far as the use of TCP/IP protocol suite is concerned, 3G LTE, similar to other types of wireless networks, suffers from high error rates present at radio channel. Indeed, the TCP/IP protocol suite was originally designed for fixed wired networks where Bit Error Rate (BER) typically varies from 10⁻⁶ to 10⁻⁸, while for wireless channels BER varies from 10⁻¹ to 10⁻³. Such error rates are unacceptable for the TCP and cause significant performance degradation.

In order to compensate wireless errors, 3G LTE employs an error recovery technique at the Link Layer (LL), including Automatic Repeat reQuest (ARQ) at the Radio Link Control (RLC) sublayer and Hybrid ARQ (HARQ) at the Medium Access Control (MAC) sublayer. In case of ARQ, the receiving system checks the Cyclic Redundancy Code (CRC). If the CRC is correct, an acknowledgment (ACK) is sent back to the sender and the received packet is forwarded to upper layers of the protocol stack for processing. If the CRC check fails, the packet is dropped silently or with negative ACK (NACK) notification sent to the sender. The ARQ considered for implementation in 3G LTE is of Go-Back-N type.

In HARQ, if the CRC is not correct, the packet is not dropped at the receiver side. It is stored for the case when retransmitted packet will be still erroneous and combined recovery can be attempted. This technique is known as "chase combining". Eventually the error is resolved or the maximum number of retransmissions is reached. Each following retransmission can contain additional redundancy information ("incremental redundancy"). The MAC implementation in 3G LTE considers a HARQ of stop-and-wait type, which provides the sender with a binary ACK/NACK feedback for every transmitted packet.

The combined use of ARQ and HARQ at different sublayers in the link layer improves radio channel error rate by several orders: BER is equal to 10⁻² for no retransmission, 10⁻³ after HARQ at the MAC layer, and 10⁻⁶ after ARQ at the RLC layer.

The link layer is not the only layer employing error recovery mechanisms. TCP reliability is obtained through the utilization of a positive acknowledgement scheme that specifies the TCP receiver to acknowledge data successfully received from the sender. The TCP header reserves special fields for carrying acknowledgement information. As a result, the TCP receiver can produce a TCP acknowledgment (TCP-ACK) as a standalone packet or, in case of bi-directional data exchange, encapsulate it into outgoing TCP segments. This combination of error recovery techniques at different layers leads however to a non-optimal exploitation of the available network resources.

Indeed, considering by way of example the MAC sublayer besides the TCP layer, in case of successful packet reception the user equipment has to generate the HARQ ACK response at the MAC level and the TCP ACK response at the TCP level. The TCP ACK response is an ordinary payload for the user equipment link layer and requires in turn an acknowledgement by the HARQ entity at the base station ("enhanced Node B", eNB). Summarizing, a single TCP data packet transmission over the radio channel is acknowledged three times, one at the transport level and two times at the link layer, thus making the acknowledgment procedure complex.

Moreover, while HARQ ACKs are just some bits in size, the TCP ACK, as any other payload packet, requires a protocol overhead added at the lower protocol layers (IP, link and physical layers) and therefore consumes a relatively large amount of uplink bandwidth resources, thereby reducing overall system capacity. Further, the user equipment has to negotiate bandwidth for the uplink transmission, and this is a further uplink overhead and causes a delay increase due to the time elapsing between the bandwidth request and the bandwidth grant reception at the user equipment. A proposal for optimisation of the error recovery procedures in TCP/IP based data transmission is disclosed in the paper "A Cross-layer Scheme for TCP performance Improvement in Wireless LANs", by D. Kliazovich and F. Granelli, presented at the Global Telecommunications Conference (Globecom) 2004, Dallas, TX, USA, 30 November - 3 December, 2004, pages 840 - 844 of the conference proceedings. The solution disclosed in the paper is based on the provision of software entities ("ARQ Snoop Agent") operating between the TCP and the MAC layers in both the sender and the receiver nodes and designed for the exploitation of the link layer ARQ scheme by TCP so as to avoid transmission of TCP ACK packets by the user equipment (UE) towards the base station in a direction opposite to the data flow. Essentially, after a successful packet delivery by the MAC layer, the relevant acknowledgment is sent to the Snoop Agent of the sender node through the link layer interface, and the sender node's agent generates the TCP ACK packet according to the selected TCP acknowledgment scheme. At the same time, the Snoop Agent of the receiver node drops the TCP ACK packet generated by the TCP layer of the same node.

The prior art solution has been studied for mostly static wireless networks, like those conforming to IEEE 802.11 standards, e.g. for Wireless Fidelity (WiFi) networks, and even if its concepts can be applied to a network supporting mobility like 3G LTE, application in a mobile environment is complex and costly. Actually, the prior art solution entails the need of storing at a base station all TCP flow related information (sender sequence number, acknowledgement number, last acknowledged packet sequence number) for every flow traversing that base station. This entails that the base station is to support the whole of the TCP and IP protocol layers, and, in case UE performs soft (hard) mobility handover, the whole of the flow related information is to be transferred to the new base station, this being a time-consuming operation. A further disadvantage is that the prior art solution is not susceptible of a gradual introduction in networks already deployed: indeed, in case the Snoop Agent is implemented in a UE but not in the eNB, the latter would never be able to send its TCP ACK to the packet source, so that a standing retransmission of packets would take place.

An additional disadvantage of wireless networks is that the Quality of Service (QoS) decreases with the distance from a base station (BS) to a user equipment (UE). This aspect is more noticeable near the cell edge, where the interference received from other base stations is higher. Networks that suffer this problem are for example GPS, UMTS, LTE, WiMAX (IEEE 802.16) and WLAN (IEEE 802.11). In order to overcome this problem, Relay Nodes (RN) have been introduced and deployed near the cell edge. This permits to serve a UE far from the BS even with high bit rates. Networks using relay nodes are frequently also called multihop networks or multihop communication.

However, the use relay nodes results in a higher overhead for a data packet, increased processing time, and in a greater network management complexity. Examples of this type of networks are described in the EU-WINNER-Project (https://www.ist-winner.org/) and WiMAX Relay (IEEE 802.16j).

For a wireless communication system that uses one or more relay nodes in combination with ARQ, there exists the additional drawback that the delay time (time duration from the sending of the data packet from a source node until receipt of an acknowledgment message in the source node) is more likely to exceed the predetermined time period after which a data packet is resent due to non arrival of the acknowledgment message. This results in a resending of the data packet (or of a second data packet with a payload that is equal to the first data packet) although no transmitting error occurred and consequently this results in a waste of network resources. It is therefore the objective of the present invention to overcome this drawback. This objective is achieved by the measures according to the independent claims. Preferred embodiments are described in the dependent claims.

In order to optimize error recovery procedures of data packet transmission from a source node to a destination node over a wireless communication system, a first data packet is sent from the source node to the destination node. Upon arrival of the first data packet, the destination node sends an acknowledgment message via a relay node to the source node. The acknowledgment message indicates the arrival of the first data packet at the destination node. Between the sending of the first data packet from the source node and the receiving of the acknowledgment message at the source node, a second data packet sent out from the source node and forwarded to the relay node. The second data packet comprises in a destination address field an address representing the destination node. The second data packet further comprises a payload with a content that is equal to the content of a payload of the first data packet. Upon arrival of the second data packet at the relay node the second data packet is dropped due to an arrival of the acknowledgment message at the relay node.

According to a preferred embodiment the second data packet is equal to the first data packet. In other words, for this embodiment the second data packet is simply a resending of the first data packet, since no acknowledgment message for the first data packet has arrived yet at the source node.

According to another preferred embodiment, the second data packet is dropped at the relay node due to a previous arrival of the acknowledgment message at the relay node. However, it is also possible that the second data packet arrives at the relay node after the acknowledgment message, since processing of the second date packet also requires time. In such a case, the second data packet can be dropped due to an arrival of the acknowledgment message as long as the second data packet is not yet sent out from the relay node before the arrival of the acknowledgment message.

According to another preferred embodiment the data link layer payloads of the first data packet and of the second data packet are equal. According to yet another embodiment the transport layer payloads of the first data packet and the second data packet are equal.

According to another preferred embodiment the source node is a base station and the destination node is a user equipment. This embodiment is particularly advantageous for asymmetric transfer rates, with a predominance of downlink (from base station to user equipment) bandwidth over uplink bandwidth, because the effect of resource saving is higher.

According to another preferred embodiment, the acknowledgment message comprises a representation of the first data packet. This representation is preferably written in the header of the physical layer or of the data link layer, more preferably in the MAC layer header, e.g. before arriving at the relay node. The advantage of this solution is that the relay node does not require to perform packet inspection above the data link layer, which significantly saves time and processing resources. However, the representation can also be written into the transport layer header. It is also possible to have a representation in the TCP header and in the MAC header redundantly.

According to another preferred embodiment, the representation in the data link layer header is created by applying a function on TCP flow related information, for example a hash function or another function that compresses the TCP flow related information into a small number that requires less memory and that may serve as a digital fingerprint for the data packet. The TCP flow related information comprises according to a more specified preferred embodiment a sender sequence number and/or an acknowledgment number and/or a last acknowledged packet sequence number and/or the IP source and destination addresses.

According to another preferred embodiment, the representation in the data link layer is created by the user equipment. For this solution, the relay node has implemented means for reading out the representation from layer 2 (=data link layer). The advantage of this solution is that the relay node does not require to support layers higher than layer 2. In addition, packet inspection for layers higher than layer 2 are far more time consuming than packet inspections of layer 2. As a result, processing time and processing resources can be saved significantly.

Preferred embodiments of the invention are in the following described on the basis of the figures.

Figures 1A and 1B illustrate a preferred embodiment of the invention.

Figures 2A and 2B illustrate another preferred embodiment of the invention.

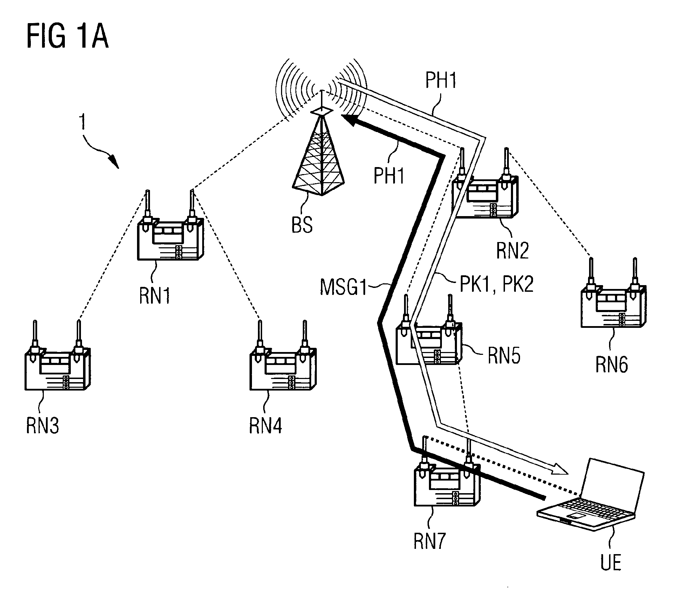

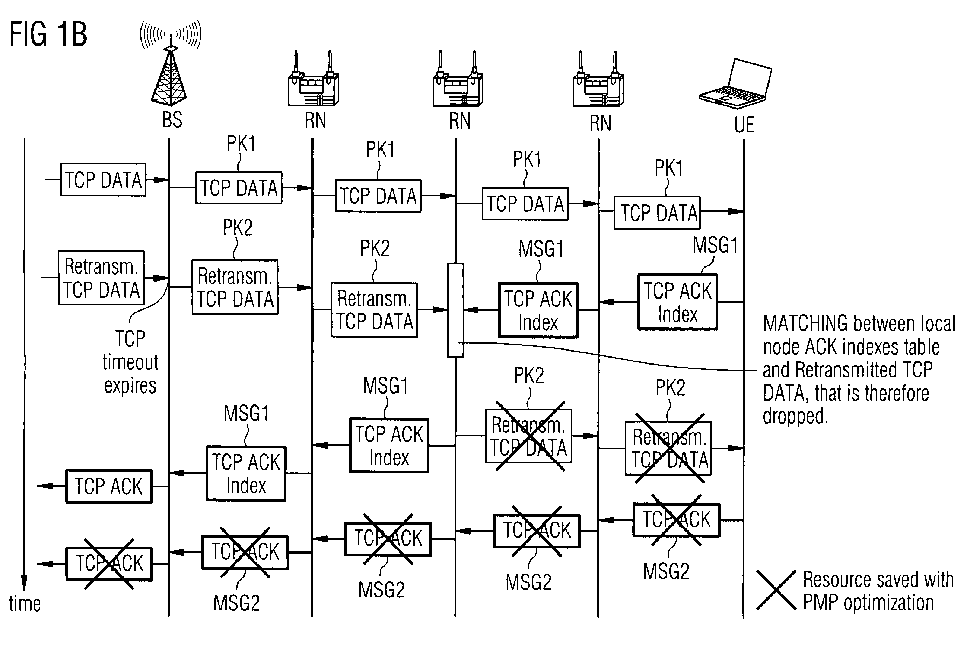

Figures 1A and 1B illustrate a preferred embodiment of the invention.

Figure 1A shows an overview over a wireless communication system 1 comprising a plurality of network elements. The plurality of network elements comprises a base station BS, relay nodes RN1, RN2, RN3, RN4, RN5, RN6, RN7 and user equipment UE. Connections between the network elements are indicated with pointed lines. In the embodiment of figures 1A and 1B, data packets and acknowledgment messages that are exchanged between the base station BS and the user equipment UE travel along the path PH1 as can be seen in figure 1A (of course, acknowledgment messages travel in the opposite direction of the data packets). The path PH1 comprises the relay nodes NR2, RN5, RN7.

Figure 1B shows the forwarding of data packets PK1, PK2 and acknowledgment messages MSG1 between network elements in their temporal evolution (time). A first data packet PK1 is sent from the base station BS along the path PH1 to the user equipment UE. Upon arrival of the first data packet PK1 at the user equipment UE, the user equipment UE sends an acknowledgment message MSG1 indicating the arrival of the first data packet PK1 to the base station BS along the path PH1. Therefore the acknowledgment message MSG1 comprises in the header for the MAC layer a representation of the first data packet PK1. This representation is evaluated by applying a function (for example a hash function) to predetermined header portions of the first data packet, such as for example the sender sequence number, the acknowledgment number, the last acknowledged packet sequence number and the IP source and destination addresses. When passing relay node RN5, the representation is read out from the acknowledgment message and stored into a table comprised by relay node RN5. This way relay node RN5 "knows" that the first data packet PK1 was received correctly by it's destination.

The representation is also evaluated and stored in the base station BS upon processing of the first data packet PK1 in the base station BS. Upon arrival of the acknowledgment message MSG1 at the base station BS1, the base station BS1 compares the representation from the acknowledgment message MSG1 with the representation stored in the base station BS1 in order to register the correct transmission of the first data packet PK1 and in order to prevent the content of the first data packet PK1 from being resent by the base station BS1.

However, as visible in figure 1B, before arrival of the acknowledgment message MSG1 at the base station BS, due to a too long delay time (delay time is the time period from the sending of the first data packet PK from the base station until the receipt of the acknowledgment message at the base station) the base station BS1 resends the data link layer payload of the first data packet PK1 in a second data packet PK2. The second data packet PK2 is sent between the sending of the first data packet PK1 from the base station BS1 and the receiving of the acknowledgment message MSG1 at the base station BS1. The second data packet PK2 comprises in a destination address field an address representing the user equipment UE. The second data packet PK2 arrives at relay node RN5 after the acknowledgment message MSG1. Upon arrival of the second data packet PK2 at the relay node RN5, the same function that was previously applied to the predetermined header portions of the first data packet PK1 is applied in RN5 to the same header portions of the second data packet PK2, resulting in a representation for the second data packet. The representation for the second data packet is compared with the representation for the first data packet that was previously stored in the table of RN5. Due to an equivalence or due to an identity of the representation for the first data packet PK1 and the representation for the second data packet, the second data packet is dropped.

The term "dropping the second data packet" in this context means not to forward the second data packet PK2 and optionally to delete the second data packet PK2. As indicated with the crossed second data packets PK2 in figure 1B, due to the dropping of the second data packet PK2 in relay node RN5, the non-forwarding of the second data packet PK2 from the relay node RN5 on and the subsequent obsoleteness of a second acknowledgment message MSG2 indicating the correct transmission of the second data packet PK2, network resources can be saved.

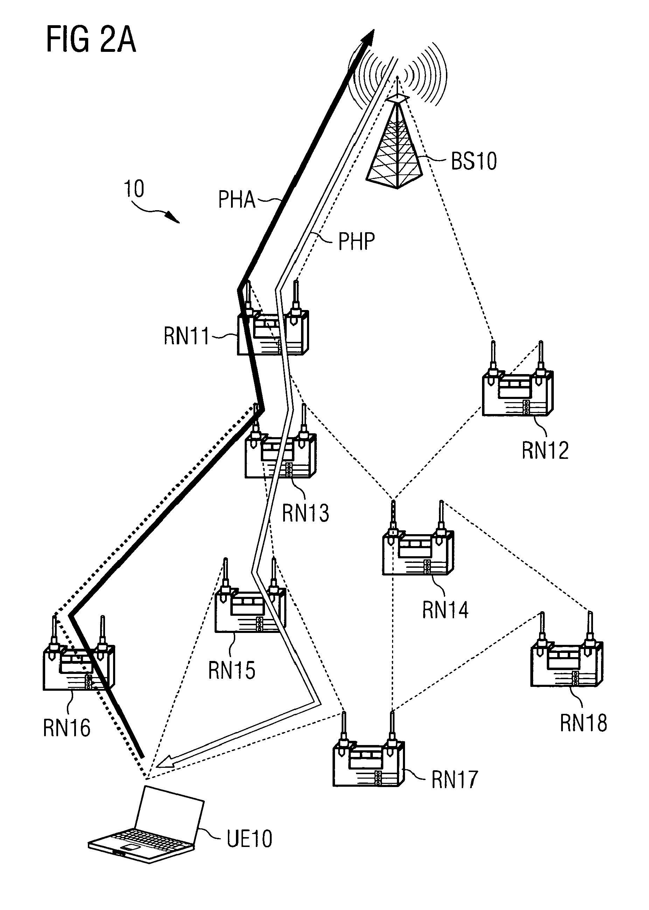

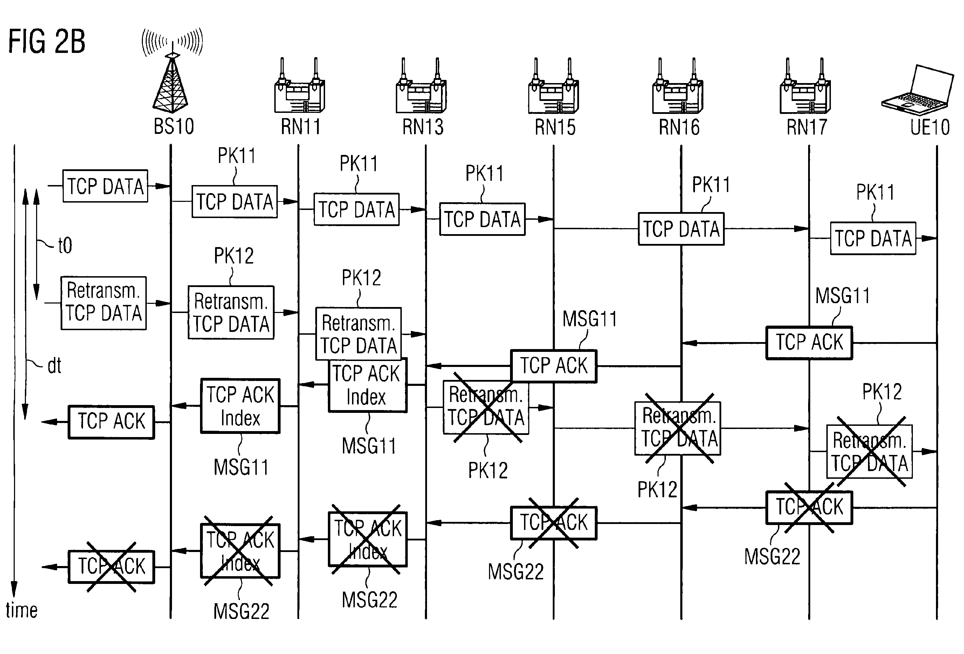

Figures 2A and 2B illustrate a preferred embodiment of the invention which is similar to the embodiment of figures 1A and 1B. However, differences to the embodiment of figures 1A and 1B are in the following described:

Figure 2A shows an overview over a wireless communication system 10 comprising a plurality of network elements. The plurality of network elements comprises a base station BS10, relay nodes RN11, RN12, RN13, RN14, RN15, RN16, RN17, RN18, and user equipment UE10. As in figure 1A connections between the network elements are indicated with pointed lines. But in contrast to the embodiment of figures 1A and 1B, in the embodiment of figures 2A and 2B data packets and acknowledgment messages exchanged between the base station BS10 and between the user equipment UE10 do not travel along the same path. Instead, the data packets and acknowledgment messages can travel individually. Figure 2A shows the path PHP along which a first data packet PK11 and a second data packet PK12 travel, while an acknowledgment message MSG11 travels along the path PHA.

This is also illustrated in figure 2B. Figure 2B shows the forwarding of data packets PK11, PK12 and acknowledgment messages MSG11 between network elements in their temporal evolution (time). The first data packet PK11 is sent from the base station BS10 via the relay nodes RN11, RN13, RN15, RN17 to the user equipment UE10. Upon arrival of the first data packet PK11 at the user equipment UE, the user equipment UE sends an acknowledgment message MSG11 via the relay nodes RN16, RN13, RN11 to the base station BS10. The acknowledgment message MSG11 indicates the arrival of the first data packet PK11 at the user equipment UE. The delay time dt (delay time is the time period from the sending of the first data packet PK from the base station until the receipt of the acknowledgment message at the base station) is also indicated in figure 2B. Within the delay time dt, a predetermined time period t0 after the sending of the first data PK11 packet, the first data packet PK1 is resent in the form of a second data packet PK12 from the base station BS. In this embodiment second data packet PK12 is supposed to travel along the same path PHP as the first data packet PK1 to the user equipment UE10. However, the second data packet PK12 shall not reach the user equipment UE10. As can be seen in figure 2B, the second data packet PK12 is forwarded via RN11 to RN13. While the second data packet PK12 is being processed by the relay node RN13, the acknowledgment message MSG11 arrives at the relay node RN13. The relay node RN13 is informed by the acknowledgment message MSG11 about the correct transmittal of the first data packet PK11 by reporting this event in a table within the relay node RN13. When the second data packet PK12 enters relay node RN13, due to a comparison of the second data packet PK12 with the entries in the table, the processing and forwarding of the second data packet PK12 is stopped in RN13 and the second data packet PK12 is dropped. The saving in network resources is indicated by the crossed non-forwarding of the second data packet PK12 and subsequent non-sending of a second acknowledgment message MSG22 from the user equipment UE10 to the base station BS10.

In the embodiment of figures 2A and 2B, the acknowledgment message MSG11 that is sent out from the user equipment, comprises in a transport layer header a representation TCP ACK of the first data packet PK11. This corresponds to a more specified preferred embodiment in case the user equipment has no information available if the next hop relay node RN16 for the acknowledgment message MSG11 supports processing of an acknowledgment message that comprises in the data link layer header a representation of the first data packet PK1. Therefore the user equipment encapsulates TCP flow related information in the transport layer header of the acknowledgment message MSG11. The TCP flow related information for example comprises the sender sequence number, the acknowledgment number, the last acknowledged packet sequence number and the IP source and destination addresses.

The embodiment of figures 2A and 2B shall not be interpreted in a liming way. The invention even works if each data packet and each acknowledgment message travels an individual path (e.g. the first data packet PK11 travels a different path than the second data packet PK12). For the functioning of the invention it is only necessary that the acknowledgment message MSG11 for the first data packet PK11 arrives at one of the relay nodes before the second data packet PK12 is to be sent out from said relay node.

However in the embodiment represented by figures 2A and 2B, it is supposed that relay node RN13 supports processing of an acknowledgment message that comprises in the data link layer header a representation of data packets. Therefore the relay node RN13 transforms a data packet that comprises the acknowledgment message MSG11 such that a representation for the first data packet is written into the header of the data link layer, preferably into the header of the MAC layer. The representation for the header of the data link layer is generated by applying for example a hash function on TCP flow related information, for example the sender sequence number, the acknowledgment number, the last acknowledged packet sequence number and the IP source and destination addresses.

In the embodiments above with regard to the claims terminology, the base stations correspond to the source nodes, while the user equipments correspond to the destination nodes. However, the principles of the invention work analogous for data packets being sent from the user equipment to the base station, thus a user equipment can also take over the role of a source node and the base station can take over the role of a destination node.

## Claims

1. Method for optimizing error recovery procedures of data packet transmission from a source node (BS, BS10) to a destination node (UE, UE10) over a wireless communication system (1, 10), the method comprising the steps of:
- sending a first data packet (PK1, PK11) from the source node (BS, BS10) to the destination node (UE, UE10);
- sending from the destination node (UE, UE10) an acknowledgment message (MSG1, MSG11) via a relay node (RN5, RN13) to the source node (BS, BS10), indicating the arrival of the first data packet (PK1, PK11) at the destination node (UE, UE10);
- between the sending of the first data packet (PK1, PK11) from the source node (BS, BS10) and the receiving of the acknowledgment message (MSG1, MSG11) at the source node (BS, BS10), sending from the source node (BS, BS10) to the relay node (RN5, RN13) a second data packet (PK2, PK12) comprising in a destination address field an address representing the destination node (UE, UE10), said second data packet (PK2, PK12) further comprising a payload that is equivalent to the payload of the first data packet;
- upon arrival of the second data packet (PK2, PK12) at the relay node (RN5, RN13), dropping the second data packet (PK2, PK12) due to an arrival of the acknowledgment message (MSG1, MSG11) at the relay node (RN5, RN13).

2. The method of claim 1,
**characterized in that**
the source node is a base station and the destination node is a user equipment.

3. The method of claim 1,
**characterized in that**
the source node is a user equipment and the destination node is a base station.

4. The method of any one of the preceding claims,
**characterized in that**
the acknowledgment message (MSG1, MSG11) comprises in the payload of the physical layer or in the payload of the data link layer a representation of the first data packet (PK1, PK11).

5. The method according to any one of the preceding claims,
**characterized in that**
the acknowledgment message (MSG1, MSG11) comprises in the header of the physical layer or of the header of the data link layer a representation of the first data packet (PK1, PK11).

6. The method according to claim 4 or claim 5,
**characterized in that**
the representation is created by applying a function on TCP flow related information.

7. The method according to claim 6,
**characterized in that**
the function is a hash function.

8. The method claim 6 or 7,
**characterized in that**
the TCP flow related information comprises a sender sequence number and/or an acknowledgment number and/or a last acknowledged packet sequence number and/or the IP source and destination addresses.

9. The method of any one of the claims 4 to 8,
**characterized in that**
the representation is created by the destination node (UE, UE10).

10. The method of any one of claims 4 to 8,
**characterized in that**
the representation is created by the relay node (RN13) or by another relay node which forwards the acknowledgment message.

11. The method of any one of the preceding claims,
**characterized in that**
the first data packet (PK1, PK11) and the second data packet (PK2, PK12) travel an identical path and that the acknowledgment message (MSG1, MSG11) travels the path of the first data packet (PK1, PK11) in opposite direction.

12. The method of any one of the preceding claims,
**characterized in that**
data packets (PK1, PK11, PK2, PK12) and acknowledgment messages (MSG1, MSG11) travel individual paths.

13. The method of any one of the preceding claims,
**characterized in that**
the payload of the second data packet is identical to the payload of the first data packet (PK1, PK11).

14. Wireless communication system (1, 10) comprising means (UE, UE10, RN5, RN13) for performing the method steps according to any one of the preceding claims.
